**Europäisches Patentamt**

**European Patent Office**

**Office européen des brevets**

(19)

(11) **EP 1 512 499 A2**

(12) **EUROPEAN PATENT APPLICATION**

(43) Date of publication:
**09.03.2005 Bulletin 2005/10**

(51) Int Cl.⁷: **B25J 9/16**

(21) Application number: **04255297.6**

(22) Date of filing: **01.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **02.09.2003 JP 2003310409**

(71) Applicant: **FANUC LTD**
**Minamitsuru-gun, Yamanashi 401-0597 (JP)**

(72) Inventors:
• **Ban, Kazunori**
  **Minamitsuru-gun, Yamanashi 401-0304 (JP)**
• **Takizawa, Katsutoshi**
  **Tokyo, 157-0067 (JP)**

(74) Representative: **Billington, Lawrence Emlyn**
**Haseltine Lake,**
**Imperial House,**
**15-19 Kingsway**
**London WC2B 6UD (GB)**

(54) **Robot having a camera mounted at the distal end of its arm and method for operating such a robot**

(57) A robot automatically moving a distal end portion of a robot arm to an arbitrary target position, and method therefor. A camera mounted at the distal end portion of the robot arm captures an image of an object. A position $R_1$ corresponding to the target Q is specified in the image. Assuming that the number of pixels between the position $R_1$ and the center of an image screen is equal to $N_1$, a distance $W_1$ observed at a distance $L_0$ at the time of calibration is determined as $W_1=C_0 \cdot N_1$, where $C_0$ is a transformation coefficient. The camera is moved by the distance $W_1$ in an X axis direction toward the target Q. A position $R_2$ corresponding to the target W is specified in the image. The number, $N_2$, of pixels between the position $R_2$ and the screen center is determined. A motion vector q is determined from $C_0$, $N_1$, $N_2$ and $L_0$. The camera is moved according to the motion vector q. The robot is positioned at a position where the camera center is opposed to the target Q at the distance $L_0$. By specifying the target Q in the image, a motion to the specified target Q position is automatically realized.

FIG. 1

**Description**

BACKGROUND OF THE INVENTION

1. Field of the Invention

The present invention relates to a method of operating an industrial robot to move a distal end portion of a robot arm to a specified position, and also to a robot capable of performing such motion.

2. Description of Related Art

When moving a robot in accordance with a manual operation by an operator, the operator generally uses a teach pendant to manually move respective axes (articulations) of the robot or manually operate the robot along coordinate axes of a rectangular coordinate system. In the former operation where each specified articulation axis of the robot is moved in a positive or negative direction, a resultant robot motion varies depending on which axes are specified since each axis is adapted for a rotary or translation motion depending on the robot mechanism or structure. In the latter type of manual operation, the robot is so operated that the robot tool end point (TCP) is moved in the positive or negative direction of each specified coordinate axis of the rectangular XYZ coordinate system defined in a robot working space, or the TCP is rotated in the positive or negative direction around an axis passing through the center of the TCP.

When manually moving a robot in a real space, an operator usually wishes to move the robot in an arbitrary direction. In order to move the robot in the intended direction by use of the aforesaid conventional manual operation method, the operator must think well to find a proper combination of a plurality of motions capable of realizing the required robot motion as a whole and each achieved by teach pendant operation, while keeping in mind a relationship between intended robot motion direction and motion directions achieved by teach pendant operations. For simplicity, it is assumed here that the robot is to be moved in a real space to exactly midway between positive X and Y directions (i.e., moved in the direction inclined at an angle of 45 degrees to both the X and Y axes) on a Z plane whose Z-axis coordinate value is constant. In this case, the operator performs a bit of operation for causing a motion to the positive X axis direction to slightly move the robot in that direction, and then performs an operation for causing a motion to the positive Y axis direction to move the robot in that direction by an amount equivalent to the preceding X axis motion amount. Subsequently, the operator alternately repeats these operations to realize the intended robot motion. Thus, a so-called zigzag motion is resulted. Even for this simple case, the aforesaid operations are needed. In order to achieve a robot motion in an arbitrary direction, therefore, more difficult operations requiring skill must be made. Furthermore, the operator can frequently misunderstand the direction (positive or negative) to which the robot is to be moved. As a result, the operator sometimes erroneously moves the robot in an unintended direction, resulting in danger. In most cases, the robot is moved toward a workpiece, and hence an accident of collision of the robot and the workpiece is liable to occur. This makes the manual robot operation further difficult.

SUMMARY OF THE INVENTION

The present invention provides a robot capable of automatically move a distal end portion of a robot arm to an arbitrary target position in accordance with a demand of an operator, and a method of operating the robot to perform such motion. The robot of the present invention has a camera mounted at a distal end portion of a robot arm.
According to a first aspect of the present invention, the robot comprises: means for positioning the distal end portion of the robot arm with the camera at a first position on a plane spaced from an object by a predetermined first distance; means for displaying an image captured by the camera at the first position on a display device; means for allowing a manual operation to specify an arbitrary point on the object in the captured image displayed on the display device; means for obtaining position information of the specified point in the captured image; means for determining a direction/amount of motion of the camera to a second position where the camera confronts the specified point on the object with a predetermined second distance in between based on the obtained position information and the first predetermined distance; and means for moving the distal end portion of the robot arm with the camera to the second position in accordance with the determined direction/amount of motion.
According to a second aspect of the present invention, the robot comprises: means for displaying an image captured by the camera on a display device; means for allowing a first manual operation to specify an arbitrary point on an object in a first image captured by the camera at a first position and displayed on the display device; means for obtaining first position information of the specified point in the first image; means for determining a first direction/amount of motion based on the first position information; means for moving the distal end portion of the robot arm with the camera to a second position according to the determined first direction/amount of the first motion; means for allowing a second manual operation to specify the same point on the object as specified by the first manual operation, in a second image captured by the camera at the second position and displayed on the display device; means for obtaining second position information of the specified point in the second image; means for determining a second direction/amount of motion based on the first position information and the second position information; and means for moving the distal end portion of the robot arm with the camera to a third position according to the determined second direction/amount of motion.

According to a third aspect of the present invention, the robot comprises: means for displaying an image captured by the camera on a display device; means for allowing a first manual operation to specify an arbitrary point on an object in a first image captured by the camera at a first position and displayed on the display device; means for obtaining first position information of the specified point in the first image; means for determining a first direction of motion based on the first position information; means for moving the distal end portion of the robot arm with the camera to a second position according to the determined first direction of motion and a preset amount of motion; means for allowing a second manual operation to specify the same point on the object as specified by the first manual operation, in a second image captured by the camera at the second position and displayed on the display device; means for obtaining second position information of the specified point on the object in the second image; means for determining a second direction/amount of motion based on the first position information and the second position information; and means for moving the distal end portion of the robot arm with the camera to a third position according to the determined second direction/amount of motion.

According to a fourth aspect of the present invention, the robot comprises: means for displaying an image captured by the camera on a display device; means for allowing a first manual operation to specify an arbitrary point on an object in a first image captured by the camera at a first position and displayed on the display device; means for obtaining first position information of the specified point in the first image; means for moving the distal end portion of the robot arm with the camera to a second position according to a preset first direction/amount of motion; means for allowing a second manual operation to specify the same point on the object as specified by the first manual operation, in a second image captured by the camera at the second position and displayed on the display device; means for obtaining second position information of the specified point on the object in the second image; means for determining a second direction/amount of motion based on the first position information and the second position information; and means for moving the distal end portion of the robot arm with the camera to a third position according to the determined second direction/amount of motion.

According to a fifth aspect of the present invention, the robot comprises: means for detecting an object in a first image captured by the camera at a first position; means for obtaining first position information of the detected object in the first image; means for determining a first direction/amount of motion of the camera based on the first position information; means for moving the distal end portion of the robot arm with the camera to a second position according to the determined first direction/amount of motion; means for detecting the same object as the detected object, in a second image captured by the camera at the second position; means for obtaining second position information of the detected object in the second image; means for determining a second direction/amount of motion based on the first position information and the second position information; and means for moving the distal end portion of the robot arm with the camera to a third position based on the determined second direction/amount of motion.

According to a sixth aspect of the present invention, the robot comprises: means for detecting an object in a first image captured by the camera at a first position; means for obtaining first position information of the detected object in the first image; means for determining a first direction of motion based on the first position information; means for moving the distal end portion of the robot arm with the camera to a second position according to the determined first direction of motion and a preset amount of motion; means for detecting the same object as the detected object, in a second image captured by the camera at the second position; means for obtaining second position information of the detected object in the second image; means for determining a second direction/amount of motion based on the first position information and the second position information; and means for moving the distal end portion of the robot arm with the camera to a third position according to the determined second direction/amount of motion.

According to a seventh aspect of the present invention, the robot comprises: means for detecting an object in a first image captured by the camera at a first position; means for obtaining first position information of the detected object in the first image; means for moving the distal end portion of the robot arm with the camera to a second position according to a preset first direction/amount of motion; means for detecting the same object as the detected object, in a second image captured by the camera at the second position; means for obtaining second position information of the detected object in the second image; means for determining a second direction/amount of motion based on the first position information and the second position information; and means for moving the distal end portion of the robot arm with the camera to a third position according to the determined second direction/amount of motion.

According to an eighth aspect of the present invention, the robot comprises: means for detecting an object in a first image captured by the camera at a first position; means for obtaining first size information of the detected object in the first image; means for determining a first amount of motion based on the first size information; means for moving the distal end portion of the robot arm to a second position according to a preset direction of motion and the determined first amount of motion; means for detecting the same object as the detected object, in a second image captured by the camera at the second position; means for obtaining second size information and position information of the detected object in the second image; means for determining a second direction/amount of motion based on the first size information, the second size information and the position information; and means for moving the distal end portion of the robot arm with the camera to a third position according to the determined second direction/amount of motion.

According to a ninth aspect of the present invention, the robot comprises: means for detecting an object in a first image captured by the camera at a first position; means for obtaining first size information of the detected object in the first image; means for moving the distal end portion of the robot arm with the camera to a second position according to a preset first direction/amount of motion; means for detecting the same object as the detected object, in a second image captured by the camera at the second position; means for obtaining second size information and position information of the detected object in the second image; means for determining a second direction/amount of motion of the camera based on the first size information, the second size information and the position information; and means for moving the distal end portion of the robot arm with the camera to a third position according to the determined second direction/amount of motion.

According to a tenth aspect of the present invention, the robot comprises: means for displaying an image captured by the camera on a display device; means for allowing a manual operation to specify an arbitrary point on an object in a first image captured by the camera at a first position and displayed on the display device; means for obtaining first position information of the specified point in the first image; means for creating an image model based on image information in the vicinity of the specified point in the first image; means for determining a first direction/amount of motion based on the first position information; means for moving the distal end portion of the robot arm with the camera to a second position according to the determined first direction/amount of motion; means for detecting the same point as the specified point, in a second image captured by the camera at the second position using the image model; means for obtaining second position information of the detected point in the second image; means for determining a second direction/amount of motion based on the first position information and the second position information; and means for moving the distal end portion of the robot arm with the camera to a third position according to the determined second direction/amount of motion.

According to an eleventh aspect of the present invention, the robot comprises: means for displaying an image captured by the camera on a display device; means for allowing a manual operation to specify an arbitrary point on an object in a first image captured by the camera at a first position and displayed on the display device; means for obtaining first position information of the specified point in the first image; means for creating an image model based on image information in the vicinity of the specified point in the first image; means for determining a first direction of motion based on the first position information; means for moving the distal end portion of the robot arm with the camera to a second position according to the determined first direction of motion and a preset amount of motion; means for detecting the same point as the specified point, in a second image captured by the camera at the second position using the image model; means for obtaining second position information of the detected point in the second image; means for determining a second direction/amount of motion based on the first position information and the second position information; and means for moving the distal end portion of the robot arm with the camera to a third position according to the determined second direction/amount of motion.

According to a twelfth aspect of the present invention, the robot comprises: means for displaying an image captured by the camera on a display device; means for allowing a manual operation to specify an arbitrary point on an object in a first image captured by the camera at a first position and displayed on the display device; means for obtaining first position information of the specified point in the first image; means for creating an image model based on image information in the vicinity of the specified point in the first image; means for moving the distal end portion of the robot arm with the camera to a second position according to a preset first direction/amount of motion; means for detecting the same point as the specified point, in a second image captured by the camera at the second position using the image model; means for obtaining second position information of the detected point in the second image; means for determining a second direction/amount of motion based on the first position information and the second position information; and means for moving the distal end portion of the robot arm with the camera to a third position according to the determined second direction/amount of motion.

The means for determining the second direction/amount of motion may determine the second direction/amount of motion for the third position where the specified point on the object is on an optical axis of the camera and spaced apart form the camera by a predetermined distance. Further, the means for determining the second direction/amount of motion may determine the second direction/amount of motion such that an end of a tool attached to the distal end portion of the robot arm is positioned at the specified point on the object.

The present invention also provides a method of operating a robot carried out by the foregoing robot.

With the present invention, a robot can automatically operate to establish a predetermined relation between an object and a distal end portion of a robot arm by simply specifying a target on the object in an image captured by the camera, whereby an operation for moving the distal end portion of the robot arm relative to the object can be carried out very easily and safely.

BRIEF DESCRIPTION OF THE DRAWINGS

FIG. 1 is a view showing an overall arrangement of a robot according to an embodiment of this invention;
FIG. 2 is a block diagram showing an essential part of a robot controller in the embodiment;
FIG. 3 is a block diagram showing an essential part of an image processing unit in the embodiment;
FIG. 4 is a view for explaining the outline of calibration of a camera in the embodiment;
FIG. 5 is a view for explaining how to determine a view line vector in this invention;
FIG. 6 is a view for explaining the operational principle of a first embodiment of this invention;
FIG. 7 is a view for explaining the operational principle of a second embodiment of this invention;
FIG. 8 is a view for explaining the operational principle of a third embodiment of this invention;
FIG. 9 is a view for explaining the operational principle of a fourth embodiment of this invention;
FIG. 10 is a view for explaining the operational principle of a fifth embodiment of this invention;
FIG. 11 is a view for explaining transformation from a position where a camera is opposed to a target to a position where a tool is opposed to the target;
FIG. 12 is a flowchart of operation processing in the first embodiment of this invention;
FIG. 13 is a flowchart of operation processing in the second embodiment of this invention;
FIG. 14 is a flowchart of operation processing in the third embodiment of this invention;
FIG. 15 is a flowchart of operation processing in the fourth embodiment of this invention; and
FIG. 16 is a flowchart of operation processing in the fifth embodiment of this invention.

DETAILED DESCRIPTION

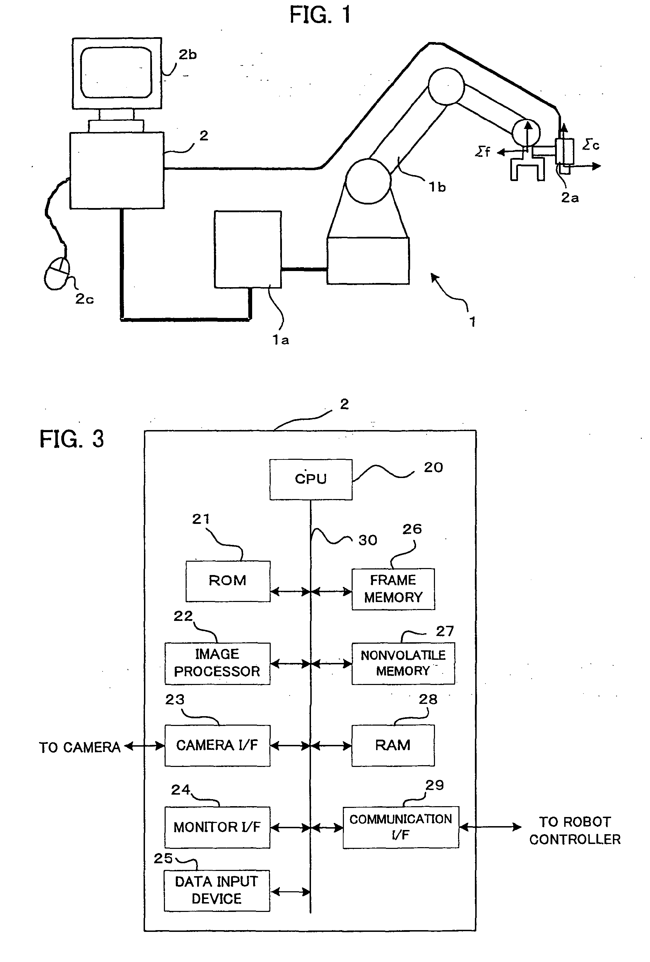

FIG. 1 is a view showing an overall arrangement of a robot according to one embodiment of this invention. There is provided an image processing unit 2 including a conventionally known typical robot controller 1a and a CCD camera 2a. The robot controller and the camera are connected to each other by means of a communication I/F. The CCD camera 2a is mounted to a distal end portion of a robot arm 1b. A relative relationship between a mechanical interface coordinate system $\Sigma f$ on a final link of the robot and a reference coordinate $\Sigma c$ on the camera is set beforehand. An image picked up by the CCD camera 2a is output to a monitor 2b. When a target on an object is specified by an operator using a mouse 2c, a position of the target is attained as image information. In accordance with calibration data for the camera 2a obtained beforehand, the attained image information is transformed into position information in units of meter. The transformed position information is transmitted to the robot controller 1a, and further transformed into motion information of the robot 1. A transformation process for attaining such robot motion information from the image information will be explained later.

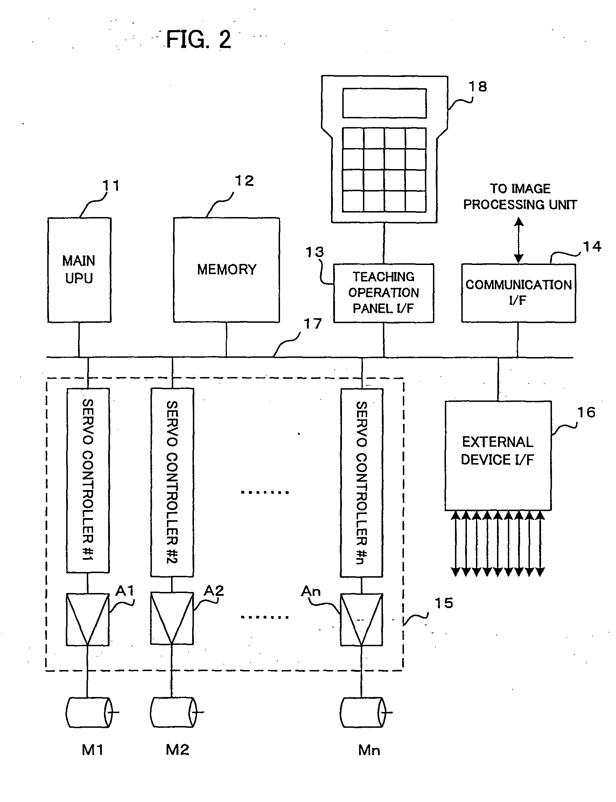

FIG. 2 is a block diagram showing an essential part of the robot controller 1a of this embodiment, which is the same in construction as a conventional one. Reference numeral 17 denotes a bus to which connected are a main processor 11, a memory 12 comprised of a RAM, ROM, non-volatile memory (such as EEPROM), an interface 13 for a teaching operation panel, an interface 14 for the image processing unit, an interface 16 for external devices, and a servo control unit 15. A teaching operation panel 18 is connected to the interface 13 for it.

A system program for performing basic functions of the robot and robot controller is stored in the ROM of the memory 12. A program for robot operation that varies depending on application is taught beforehand and stored in the non-volatile memory of the memory 12, together with relevant preset data.

The servo control unit 15 comprises servo controllers #1 to #n (where n indicates the total number of robot axes, or the sum of this number plus the number of movable axes of a tool attached to the wrist of the robot where required). Each of the servo controllers #1-#n is constituted by a processor, ROM, RAM, etc., and arranged to carry out a position/speed loop control and a current loop control for a corresponding axis-servomotor. In other words, each controller is comprised of a so-called digital servo controller for implementing software-based loop controls of position, speed, and current. Outputs of the servo controllers #1-#n are delivered through servo amplifiers A1-An to axis-servomotors M1-Mn, whereby these servomotors are drivingly controlled. Although not shown, the servomotors M1-Mn are provided with position/speed detectors for individually detecting the positions/speeds of the servomotors, so that the positions/speeds of the servomotors are fed back to the servo controllers #1-#n. Further, sensors provided in the robot as well as actuators and sensors of peripheral equipment are connected to the interface 16 for external devices.

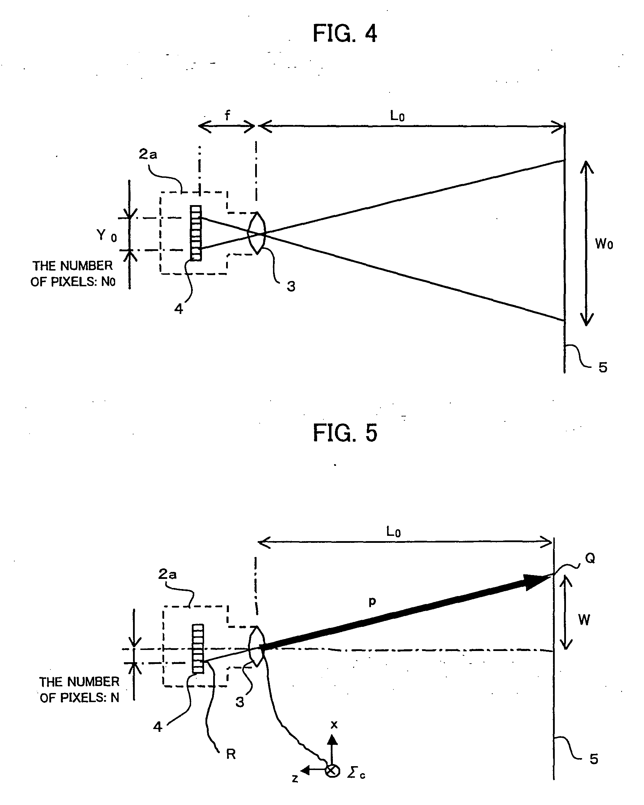

FIG. 3 is a block diagram showing an essential part of the image processing unit 2 connected to the interface of the robot controller. A processor 20 is provided, to which connected are a ROM 21 for storing a system program executed by the processor 20, etc., an image processor 22, a camera interface 23 connected to the camera 2a, an interface 24 for a monitor display comprised of a CRT, a liquid crystal or the like, a frame memory 26, a nonvolatile memory 27, a RAM 28 used for temporal data storage, etc., and a communication interface 29 connected to the robot controller 1a. An image picked up by the camera 2a is stored in the frame memory 26. The image processor 22 performs image processing of the image stored in the frame memory 26 in accordance with a command from the processor 20, thereby recognizing an object. As compared to a conventional image processing unit, this image processing unit 2 is the same in construction and function without difference.

FIG. 4 is a view for explaining the outline of calibration of the camera 2a. A calibration is performed in a condition where an object 5 is placed at a distance $L_0$ from the center of a lens 3 of the camera 2a. Specifically, a determination is made to determine to what length on the object located at the distance $L_0$ one pixel of a photodetector 4 of the camera 2a corresponds. In FIG. 4, it is determined that No pixels of the photodetector corresponds to $W_0$ mm on the object, and hence a transformation coefficient $C_0$ is determined by the following formula (1):

$$C_0 = \frac{W_0}{N_0} \text{ [mm / (the number of pixels)]} \qquad (1)$$

Since there is a relation of $f:L_0 = Y_0:W_0$ (where f denotes a lens focal length and $Y_0$ denotes a length of $N_0$ pixels) in FIG. 4, we obtain the following formula:

$$L_0 = \frac{W_0}{Y_0} f \text{ [mm]} \qquad (2)$$

Hereinafter, the distance $L_0$ used in the calibration will be used as a known value.

FIG. 5 is a view for explaining how to determine a view line vector p directing from the center of the lens 3 of the camera 2a to an arbitrary target Q on an object 5 when the arbitrary target Q on the object 5 is specified in an image picked up by the camera 2a. For convenience, a reference coordinate system is defined at the camera lens center, which corresponds to the coordinate system $\Sigma c$ shown in FIG. 1. In FIG. 5, the optical system is described on an assumption that it is on an XZ coordinate plane. Actually, the photodetector of the camera extends not only in the X and Y axis directions but also in the Y axis direction perpendicular to both the X and Z axes. Accordingly, the optical system extends three dimensionally. In the following, however for convenience, an explanation will be given referring to the two-dimensional planar optical system. Such two-dimensional planar description can be replaced by a three-dimensional spatial description with ease.

When a point R, corresponding to the arbitrary target Q on the object 5, is specified in the image, the following formulae (3) and (4) can be derived:

$$W = C_0 \cdot N \qquad (3),$$

$$p = \begin{pmatrix} W \\ 0 \\ -L_0 \end{pmatrix} \qquad \dots (4),$$

where N denotes the number of pixels between the specified point R and the image screen center.

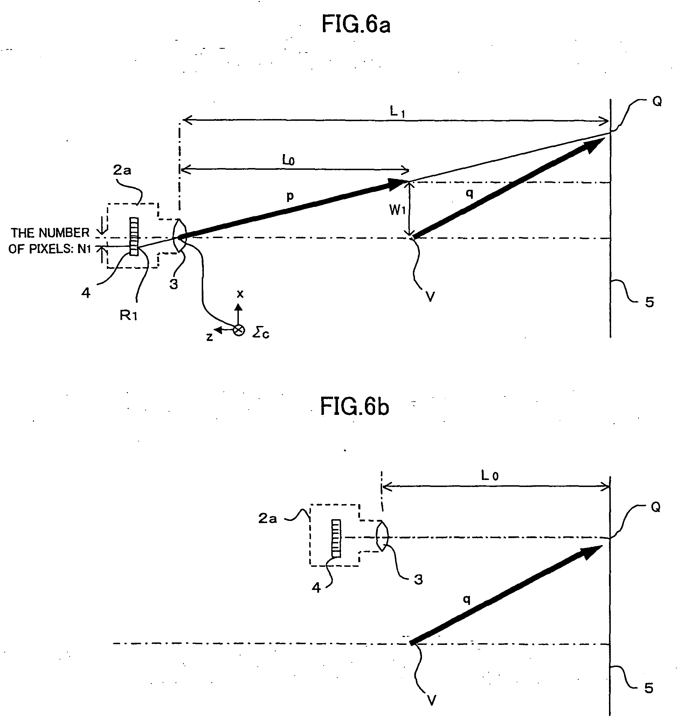

FIGS. 6a and 6b are views for explaining the operational principle of a first embodiment of this invention, which is embodied by using the structure shown in FIG. 1. An image is picked up by the camera 2a positioned at a position spaced from the object 5 by a distance $L_1$, with the camera optical axis extending perpendicular to the object. Then, the target Q on the object 5 is specified in the image. By doing this, a view line vector p extending from the center of the lens 3 toward the target Q on the object 5 is determined as shown in FIG. 6a, and a motion vector q for making a point V in FIG. 6 coincide with the target Q is calculated, whereby the camera 2a can be moved to a position spaced from the center of the lens 3 of the camera by a distance $L_0$, with the lens center opposed in front of the target Q, as shown in FIG. 6b.

In FIG. 6a, the number, $N_1$, of pixels between the screen center (optical axis position) and a specified point $R_1$ in the image corresponding to the target Q on the object 5 is measured in the specified image.

The following formulae are satisfied:

$$W_1 = C_0 \cdot N_1 \qquad (5)$$

$$p = \begin{pmatrix} W_1 \\ 0 \\ -L_0 \end{pmatrix} \qquad \dots (6)$$

Thus, the motion vector q is determined from the following formula (7):

$$q = \frac{L_1}{L_0} p - \begin{pmatrix} W_1 \\ 0 \\ -L_0 \end{pmatrix} \qquad \dots (7)$$

As described above, if the number, $N_1$, of pixels between the image center and the commanded target Q in the image has once been determined, the motion vector q can be determined from the predetermined distance $L_1$ between the object 5 and the camera 2a and the calibration data $L_0$. Then, by moving the camera 2a by the motion vector q, the camera 2a can be positioned at the position spaced from the target Q by the distance Lo, with the center of the lens 3 opposed to the specified target Q.

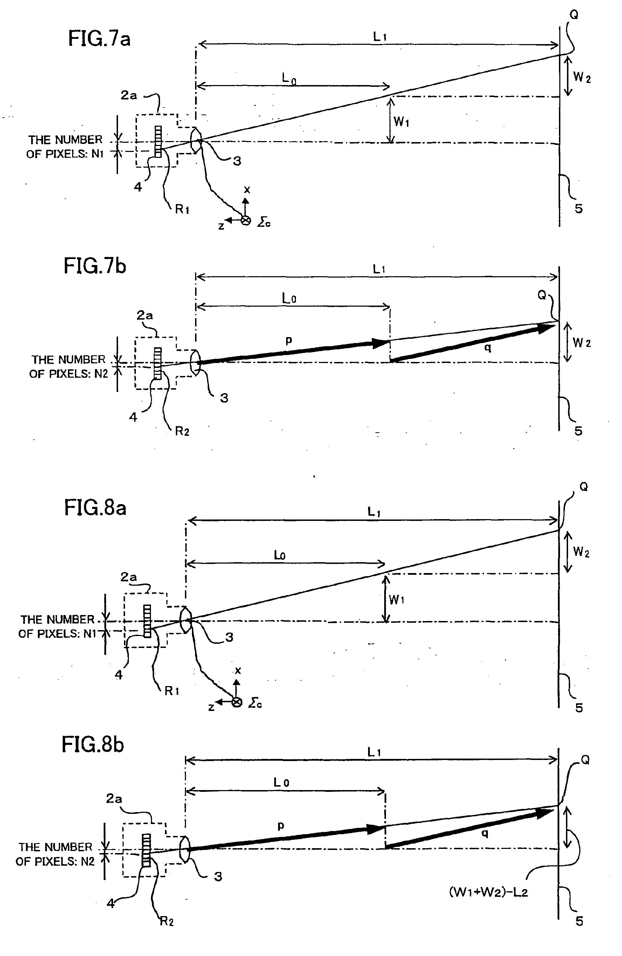

In the above described first embodiment where the distance $L_1$ between the camera 2a and the object 5 is known, the camera 2a is positioned at the position spaced from the object 5 by the predetermined distance $L_1$, and then the camera 2a is automatically moved to a position where the camera is opposed to the specified target Q. Next, a second embodiment will be explained with reference to FIGS. 7a and 7b, which is capable of moving the camera 2a to a position opposed to the specified target Q, even if the distance $L_1$ is unknown.

In FIG. 7a, the position $R_1$ corresponding to the target Q is specified in the image. Assuming that the number of pixels between the screen center and the specified point $R_1$ is equal to $N_1$, a distance $W_1$ at the position spaced from the lens center by the distance $L_0$ is determined in accordance with the following formula (8):

$$W_1 = C_0 \cdot N_1 \qquad (8)$$

Next, the camera 2a is moved by the distance $W_1$ along a line extending in parallel to a straight line connecting the target Q and a point at which the optical axis crosses the object 5. That is, in this example, the camera 2a is moved by the distance $W_1$ in the positive X axis direction in the reference coordinate system $\Sigma c$ for the camera 2a. (In case that the target Q of the object 5 is on an XY axis plane, the center of the camera 2a is moved by the distance $W_1$ along a straight line connecting the target Q and a point at which the optical axis crosses the object.) Actually, the camera is moved by the robot. FIG. 7b shows the state after the camera has been moved. In such state shown in FIG. 7b, a position $R_2$ corresponding to the target Q is specified in the image. Assuming that the number of pixels between the position $R_2$ and the image screen center is equal to $N_2$, the following formula is satisfied:

$$\frac{W_1 + W_2}{W_1} = \frac{N_1}{N_1 - N_2} = \frac{L_1}{L_0} \qquad (9)$$

In accordance with the following formula (10) derived from formula (9), the distance $L_1$ between the camera 2a and the object 5 is determined.

$$L_1 = \frac{N_1}{N_1 - N_2} L_0 \tag{10}$$

A view line vector p for the state shown in FIG. 7b is represented by the following formula (11):

$$p = \begin{pmatrix} C_0 \cdot N_2 \\ 0 \\ -L_0 \end{pmatrix} \qquad \dots (11)$$

As understood from above, a motion vector q is calculated in accordance with the following formula (12):

$$q = \frac{L_1}{L_0} p - \begin{pmatrix} 0 \\ 0 \\ -L_0 \end{pmatrix} = \frac{N_1}{N_1 - N_2} \begin{pmatrix} C_0 \cdot N_2 \\ 0 \\ -L_0 \end{pmatrix} - \begin{pmatrix} 0 \\ 0 \\ -L_0 \end{pmatrix}$$

$$= \left( \frac{C_0 \cdot N_1 \cdot N_2}{N_1 - N_2} \quad 0 \quad \frac{-N_2}{N_1 - N_2} L_0 \right)^T \qquad \dots (12)$$

where T denotes transposition.

By moving the camera 2a according to the thus determined motion vector q, the camera 2a is so positioned that the target is viewed at the center of the camera.

In the above described second embodiment, an amount of motion by which the camera 2a is initially to be moved is determined by the calculation of formula (8), however, this amount of motion may be a predetermined amount.

FIGS. 8a and 8b are views for explaining a third embodiment in which the camera is moved by such a predetermined amount $L_2$. In FIG. 8a, a position $R_1$ corresponding to the target Q is specified in an image. Assuming that the number of pixels between the specified position $R_1$ and the screen center is equal to $N_1$, a length $W_1$ at the position spaced by the distance $L_0$ from the lens center is determined as shown below.

$$W_1 = C_0 \cdot N_1 \tag{13}$$

Next, the camera 2a is moved by the prespecified distance $L_2$ along a line extending in parallel to a straight line connecting the target Q and a point at which the optical axis crosses the object 5. In actual, the camera 1a is moved by the robot 1. FIG. 8b shows a state after the camera has been moved. Then, a position $R_2$ corresponding to the target Q is specified in the image in the state shown in FIG. 8b. Assuming that the number of pixels between the specified position $R_2$ and the screen center is equal to $N_2$, the following formula (14) is fulfilled.

$$\frac{N_1}{N_1 - N_2} = \frac{W_1 + W_2}{L_2} \tag{14}$$

From FIG. 8a, we obtain

$$\frac{L_1}{L_0} = \frac{W_1 + W_2}{W_1} \tag{15}$$

From formulae (13), (14), and (15), the following formula (16) to determine a distance $L_1$ is derived.

$$L_1 = \frac{L_0 \cdot L_2}{C_0(N_1 - N_2)} \qquad (16)$$

A view line vector p in the state shown in FIG. 8b is represented by:

$$p = \begin{pmatrix} C_0 \cdot N_2 \\ 0 \\ -L_0 \end{pmatrix} \qquad \dots (17)$$

From above, a motion vector q is calculated as shown below:

$$q = \frac{L_1}{L_0}p - \begin{pmatrix} 0 \\ 0 \\ -L_0 \end{pmatrix} = \frac{L_2}{C_0(N_1 - N_2)}\begin{pmatrix} C_0 \cdot N_2 \\ 0 \\ -L_0 \end{pmatrix} - \begin{pmatrix} 0 \\ 0 \\ -L_0 \end{pmatrix}$$

$$= \left( \frac{N_2 \cdot L_2}{N_1 - N_2} \quad 0 \quad \frac{C_0 \cdot (N_1 - N_2) \cdot L_0 - L_0 \cdot L_2}{C_0 \cdot (N_1 - N_2)} \right)^T \quad \dots (18)$$

Therefore, by moving the camera 2a according to the motion vector q, the center of the lens of the camera 2a can be opposed to the target Q.

In the above described first to third embodiments, the camera 2a is initially moved in parallel to a surface of the object 5 (photodetector). However, such motion may be made in the optical axis direction.

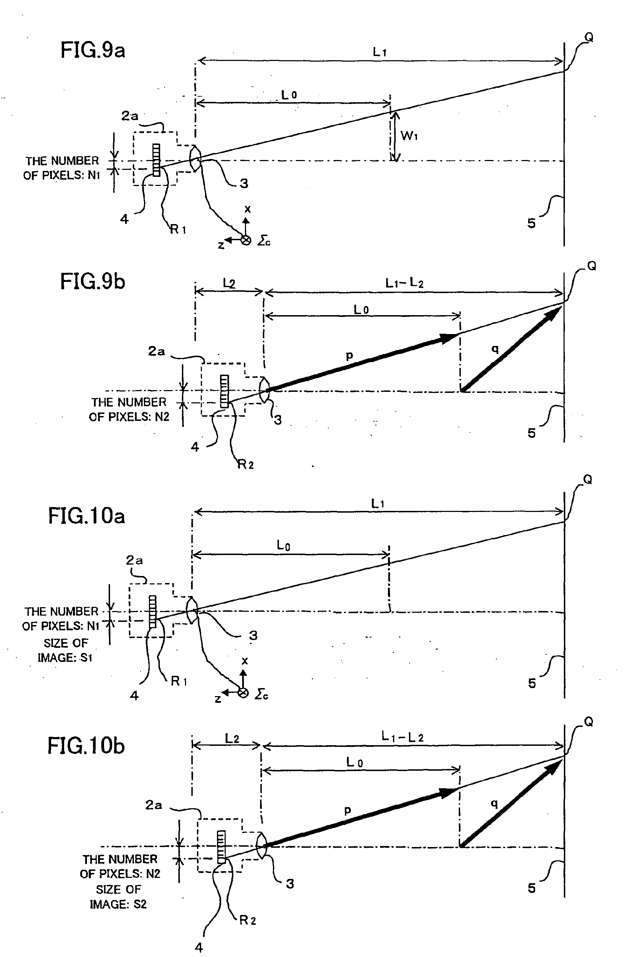

FIGS. 9a and 9b are views for explaining a fourth embodiment of this invention, in which the camera is moved in the optical axis direction. In FIG. 9a, a position $R_1$ corresponding to a target Q is specified in an image. Assuming that the number of pixels between the specified position $R_1$ and the screen center is equal to $N_1$, a length $W_1$ at a position spaced by a distance $L_0$ from the lens center is determined as shown below:

$$W_1 = C_0 \cdot N_1 \qquad (19)$$

Next, the camera 2a is moved by a prespecified distance $L_2$ toward the target Q in the direction perpendicular to the photodetector of the camera. In actual, the camera 2a is moved by the robot 1. FIG. 9b shows a state after the camera has been moved. A position $R_2$ corresponding to the target Q is specified in an image in the state shown in FIG. 9b. Assuming that the number of pixels between the specified position $R_2$ and the screen center is equal to $N_2$, the following relationship is satisfied.

$$\frac{L_1}{L_1 - L_2} = \frac{N_2}{N_1} \qquad (20)$$

Then, a distance $L_1$ is determined in accordance with the following formula (21) derived from formula (20).

$$L_1 = \frac{N_2}{N_1 - N_2}L_2 \qquad (21)$$

A view line vector q in the state of FIG. 9b is represented as:

$$p = \begin{pmatrix} C_0 \cdot N_2 \\ 0 \\ -L_0 \end{pmatrix} \qquad \ldots (22)$$

From above, the motion vector q is calculated as follows:

$$q = \frac{L_1 - L_2}{L_0} p - \begin{pmatrix} 0 \\ 0 \\ -L_0 \end{pmatrix} = \frac{N_1 \cdot L_2}{(N_2 - N_1) \cdot L0} \begin{pmatrix} C_0 \cdot N_2 \\ 0 \\ -L_0 \end{pmatrix} - \begin{pmatrix} 0 \\ 0 \\ -L_0 \end{pmatrix}$$

$$= \left( \frac{C_0 \cdot N_2 \cdot N_1 \cdot L_2}{(N_1 - N_2) \cdot L_0} \quad 0 \quad \frac{(N_2 - N_1) \cdot L_0 - N_1 \cdot L_2}{N_2 - N_1} \right)^T \quad \ldots (23)$$

In the foregoing first through fourth embodiments, methods have been explained in which the target Q on the object 5 is specified in an image. On the other hand, in a case where a shape of the target Q is previously known, an image model of the target Q may be taught beforehand, and image processing such as pattern matching may be performed to automatically detect the target Q.

Furthermore, the camera 2a may be moved to the vicinity of the target Q by using the image model in combination with size information of the target Q. Referring to FIGS. 10a and 10b, an example of such case will be explained as a fifth embodiment. First, an image model of the target Q is taught. In FIG. 10a, a position $R_1$ and a size $S_1$, corresponding to the image model of the target Q, are detected in an image. Next, the camera 2a is moved by a prespecified distance $L_2$ in a direction perpendicular to the photodetector of the camera and closer to the target Q, i.e., in the negative direction of Z axis of the reference coordinate system $\Sigma c$ for the camera 2a. Actually, the camera 2a is moved by the robot 1. FIG. 10b shows a state after the camera has been moved. In the state shown in FIG. 10b, a position $R_2$ and a size $S_2$ corresponding to the image model of the target Q are detected in an image. Here, the following relationship is satisfied.

$$\frac{L_1}{L_1 - L_2} = \frac{S_2}{S_1} \qquad (24)$$

A distance $L_1$ is determined in accordance with the following formula (25) derived from formula (24).

$$L_1 = \frac{S_2}{S_2 - S_1} L_2 \qquad (25)$$

Assuming that the number of pixels between the detected position $R_2$ and the screen center is equal to $N_2$, a view line vector p in the state shown in FIG. 10b is determined as follows:

$$p = \begin{pmatrix} C_0 \cdot N_2 \\ 0 \\ -L_0 \end{pmatrix} \qquad \ldots (26)$$

From above, a motion vector q is calculated as shown below.

$$q = \frac{L_1 - L_2}{L_0} p - \begin{pmatrix} 0 \\ 0 \\ -L_0 \end{pmatrix} = \frac{S_1 \cdot L_2}{(S_2 - S_1) \cdot L_0} \begin{pmatrix} C_0 \cdot N_2 \\ 0 \\ -L_0 \end{pmatrix} - \begin{pmatrix} 0 \\ 0 \\ -L_0 \end{pmatrix}$$

$$= \left( \frac{C_0 \cdot N_2 \cdot S_1 \cdot L_2}{(S_2 - S_1) \cdot L_0} \quad 0 \quad \frac{(S_2 - S_1) \cdot L_0 - S_1 \cdot L_2}{S_2 - S_1} \right)^T \quad \dots (27)$$

In each of the above described embodiments, the robot 1 is so automatically moved as to realize a relative relationship that the camera is positioned to be opposed in front of the target Q on the object and the distance between the camera and the target is equal to the distance $L_0$ at the time of camera calibration. However, there is a case where a different attainment target is to be achieved. For example, a distal end portion of an arc welding torch (tool) mounted to the robot is to be placed onto the target Q. In this case, if a relative relationship between target positions to be reached by the camera and the welding torch, respectively, is set beforehand, the target position of the welding torch can easily be calculated by determining the target position of the camera and by taking the relative relationship into consideration.

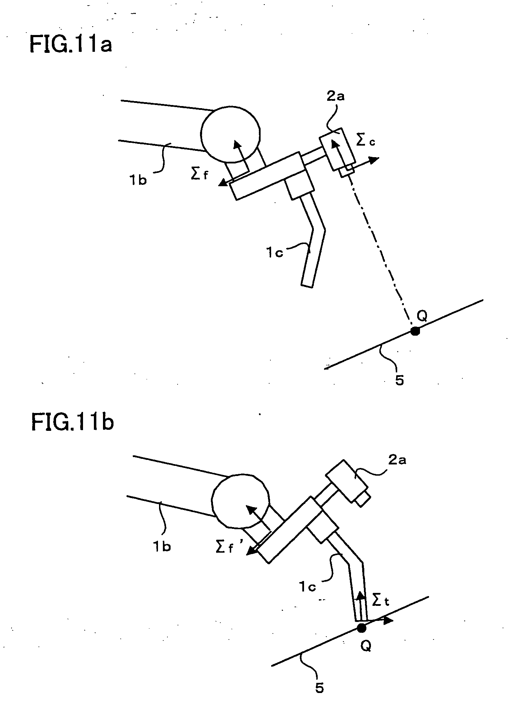

More specifically, it is assumed that $\Sigma f$ represents a position of a robot's mechanical interface coordinate system observed when the target position of the camera 2a is reached; $\Sigma f$, a position of the robot's mechanical interface coordinate system observed when the target position of the welding torch 1c is reached; $\Sigma t$, a tool coordinate system defined at the welding torch end; Tf, a homogeneous transformation matrix that represents $\Sigma f'$ on the basis of $\Sigma f$; Tc, a homogeneous transformation matrix that represents $\Sigma c$ on the basis of $\Sigma f$; and Tt, a homogeneous transformation matrix that represents $\Sigma t$ on the basis of $\Sigma f$. A target position U' to be reached by the welding torch 1c shown in FIG. 11b can be calculated as shown below:

$$U' = U \cdot T_f^{-1} \cdot T_c \cdot T_t \tag{28},$$

where U denotes a target position to be reached by the camera shown in FIG. 11a.

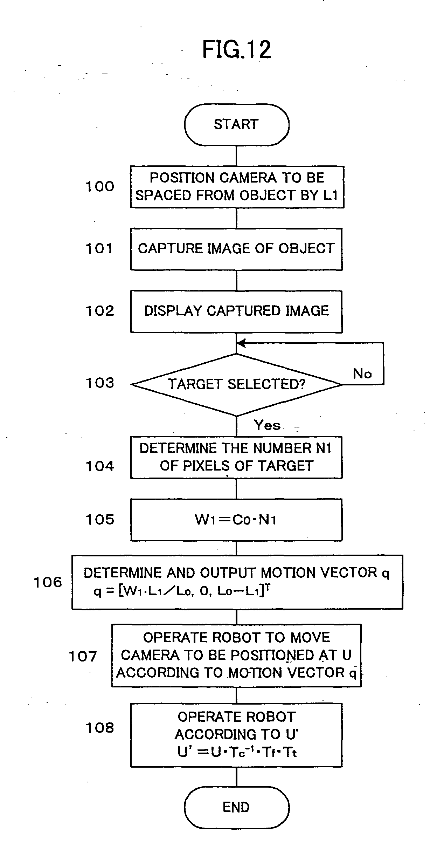

FIG. 12 is an operational flowchart in the first embodiment previously explained referring to FIG. 6. In the first embodiment, the camera 2a is positioned at the position spaced from the object 5 by the predetermined distance $L_1$.

First, the main processor 11 of the robot controller 1a drives the robot 1 so as to position the camera 2a at an image capturing position spaced from the object 5 by the predetermined distance $L_1$ (Step 100), and outputs an image capturing command to the image processing unit 2. The processor 21 of the image processing unit 2 captures an image of the object 5 picked up by the camera 2a (Step 101). The captured image is stored in the frame memory 26 and displayed on the monitor 2b (Step 102). The processor 21 of the image processing unit 2 determines whether a target Q is selectively specified by a mouse or the like (Step 103). If a target is specified, the processor determines the number $N_1$ of pixels corresponding to a position of the specified target Q (Step 104). Then, the calculation of formula (5) is performed to determine a position (distance) $W_1$ at the object 5-to-camera 2a distance $L_0$ used for calibration and corresponding to the target Q (Step 105). On the basis of the distance $W_1$, the predetermined distance $L_1$, and the distance $L_0$ used for calibration, the calculation of formula (7) is performed to determine a motion vector q, and data thereof is transmitted to the robot controller 1a (Step 106). Based on the transmitted data of motion vector q, the robot controller 1a determines a position for robot motion, and moves the robot to the determined position, whereby the camera 2a is positioned at a position where the camera is opposed to the target Q and spaced therefrom by the distance $L_0$ (i.e., at a position where the target Q is on the camera optical axis) (Step 107). If machining is to be made with use a tool, the calculation of formula (28) is performed, and the robot is moved to position the tool end at the target Q (Step 108).

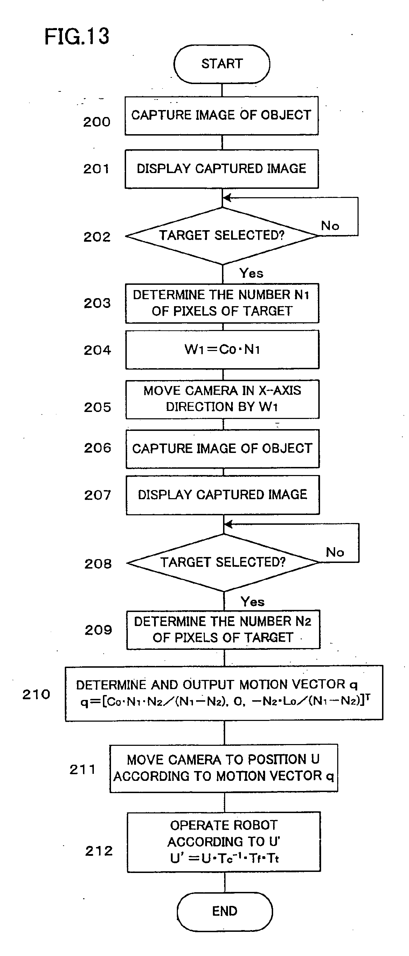

FIG. 13 is an operational flowchart in the second embodiment previously explained referring to FIG. 7.

In the second embodiment, the camera 2a is first positioned at an arbitrary position with respect to the object where an image of the object can be picked up. Thereafter, the same processing as Steps 101-105 shown in FIG. 12 is performed (Steps 200-204). The robot controller 1a is instructed to perform a robot motion by the distance $W_1$ determined at Step 204 in the direction parallel to the object face of the object 5 and parallel to a line connecting the target Q and a point where the optical axis crosses the object 5. The robot controller 1a moves the camera 2a toward the target Q by the distance $W_1$ in the direction parallel to the face of the object 5, whereby the camera is positioned there (Step 205). Then, an image of the object is picked up and captured again. This new image is displayed on the monitor 2b, and a determination is made whether a target is selectively specified (Steps 206-208). If a target is selected, the number, $N_2$, of pixels corresponding to the selected point is determined (Step 209). On the basis of the determined pixel numbers $N_1$ and $N_2$, the transformation coefficient $C_0$ determined in advance at the time of calibration, and the distance $L_0$ used for calibration, the calculation of formula (12) is performed to determine a motion vector q, and data thereof is transmitted to the robot controller 1a (Step 210). Based on the transmitted data of motion vector q, the robot controller 1a determines a position for robot motion, and moves the robot 1 to the determined position, whereby the camera 2a is positioned at a position where it is opposed to the target Q and spaced therefrom by the distance $L_0$ (i. e., at a position where the target Q is on the camera optical axis) (Step 211). If machining is to be made with use a tool, the calculation of formula (28) is performed, and the robot is moved to position the tool end at the target Q (Step 212).

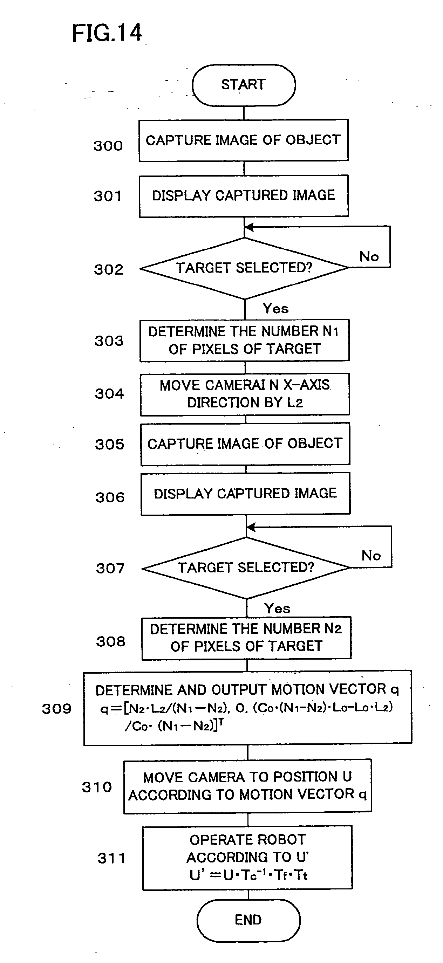

FIG. 14 is an operational flowchart in the third embodiment previously explained referring to FIG. 8.

In Steps 300-303 of the third embodiment, the same processing as Steps 200-203 shown in FIG. 13 is performed. In the third embodiment, subsequent to Step 303 where the pixel number $N_1$ is determined, the robot 1 is driven to move the camera 2a toward the target Q by the predetermined distance $L_2$ in a direction perpendicular to the optical axis of the camera 2a.(and in parallel to the face of the object) (Step 304). Then, an image of the object is picked up and captured, and if a target Q is selected, the pixel number $N_2$ corresponding to the specified target is determined (Steps 305-308).

On the basis of the determined pixel numbers $N_1$ and $N_2$, the transformation coefficient $C_0$ determined at the time of calibration, the distance $L_0$ used for calibration, and the predetermined distance $L_2$, the calculation of formula (18) is performed to determine a motion vector q, and data thereof is transmitted to the robot controller (Step 309). Based on the transmitted data of motion vector q, the robot controller 1a determines a position for robot motion, and moves the robot to the determined position, whereby the camera 2a is positioned at a position where it is opposed to the target Q and spaced therefrom by the distance $L_0$ (Step 310). If machining is to be made with use a tool, the calculation of formula (28) is performed, and the robot is moved to position the tool end at the target Q (Step 311).

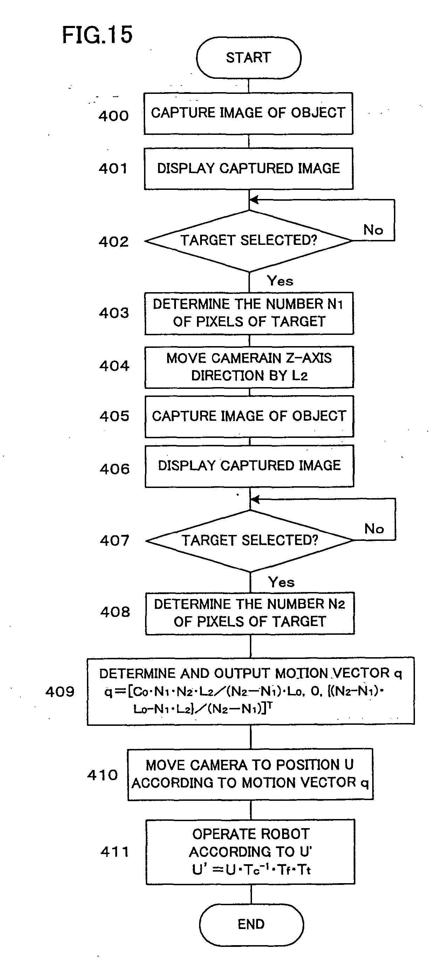

FIG. 15 is an operational flowchart in the fourth embodiment.

In Steps 400-408 of the fourth embodiment, the same processing as Steps 300-308 of the third embodiment is performed, except that the camera 2a is moved by a predetermined distance $L_2$ in the Z axis direction (optical axis direction) at Step 404 that is performed instead of Step 304 which moves the camera 2a in the direction perpendicular to the optical axis. In the fourth embodiment, on the basis of the determined pixel numbers $N_1$ and $N_2$, the transformation coefficient $C_0$ determined at the time of calibration, the distance $L_0$ used for calibration, and the predetermined distance $L_2$, the calculation of formula (23) is performed to determine a motion vector q, and data thereof is transmitted to the robot controller (Step 409). Based on the transmitted data of motion vector q, the robot controller 1a determines a position for robot motion, and moves the robot to the determined position, whereby the camera 2a is positioned at a position where it is opposed to the target Q and spaced therefrom by the distance $L_0$ (Step 410). If machining is to be made with use a tool, the calculation of formula (28) is performed, and the robot is moved to position the tool end at the target Q (Step 411).

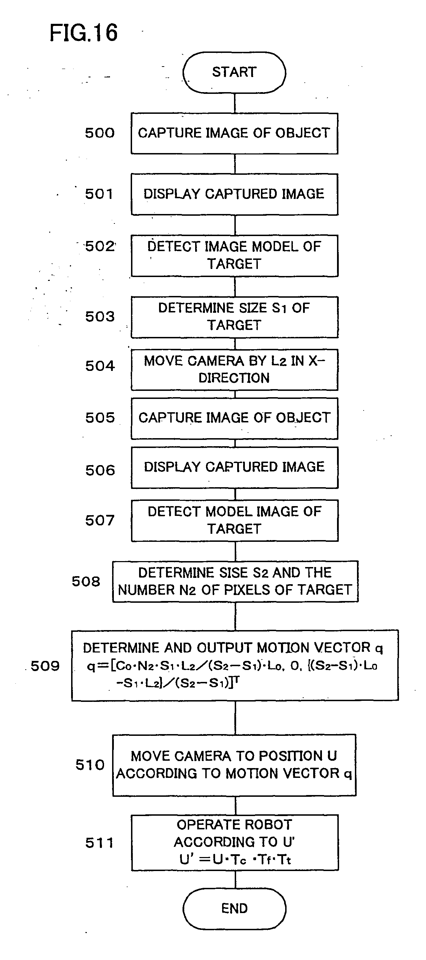

FIG. 16 is an operational flowchart in the fifth embodiment.

In the fifth embodiment, the same processing as Steps 400-408 of the flowchart shown in FIG. 15 is performed at Step 500-508, except that an image model of a target Q is taught in advance, the image model of the target Q is detected from a captured image at Step 502, a size $S_1$ of the detected target Q is determined at Step 503, the image model of the target Q is detected from a newly captured image at Step 507, and a size $S_2$ of the target Q and the pixel number $N_2$ representing a position of the target Q are determined.

In the fifth embodiment, on the basis of the detected sizes $S_1$, $S_2$ of the target Q, the determined pixel number $N_2$, the transformation coefficient $C_0$ determined at the time of calibration, the distance $L_0$ used for calibration, and the predetermined distance $L_2$, the calculation of formula (27) is performed to determine a motion vector q, and data thereof is transmitted to the robot controller (Step 509). Based on the transmitted data of motion vector q, the robot controller 1a determines a position for robot motion, and moves the robot to the determined position, whereby the camera 2a is positioned at a position where it is opposed to the target Q and spaced therefrom by the distance $L_0$ (Step 510). If machining is to be made with use a tool, the calculation of formula (28) is performed, and the robot is moved to position the tool end at the target Q (Step 511).

In each of the first through fourth embodiments, the target Q is specified on the screen by using a cursor or the like. However, if a shape of the target Q is previously known, the target Q may automatically be detected by means of image processing such as pattern matching using a model of the target Q taught beforehand. For doing this, processing to detect a shape of the model is performed at Step 102 in FIG. 12, at Steps 202, 208 in FIG. 13, at Steps 302, 307 in FIG. 14, and at Steps 402, 407 in FIG. 15.

Even if no model shape is taught beforehand, an image model may be created base on an image area near the initially specified target Q, and on the basis of the thus created image model, the target Q may automatically be detected in a second target detection. For doing this, processing to create an image model is added after each of Step 202 of FIG. 13 in the second embodiment, Step 302 of FIG. 14 in the third embodiment, and Step 402 of FIG. 15 in the fourth embodiment, and processing to detect the image model is performed in each of Steps 208, 307 and 407.

## Claims

**1.** A robot having a camera mounted at a distal end portion of a robot arm, comprising:

means for positioning the distal end portion of the robot arm with the camera at a first position on a plane spaced from an object by a predetermined first distance;
means for displaying an image captured by the camera at the first position on a display device;
means for allowing a manual operation to specify an arbitrary point on the object in the captured image displayed on the display device;
means for obtaining position information of the specified point in the captured image;
means for determining a direction/amount of motion of the camera to a second position where the camera confronts the specified point on the object with a predetermined second distance in between based on the obtained position information and the first predetermined distance; and
means for moving the distal end portion of the robot arm with the camera to the second position in accordance with the determined direction/amount of motion.

**2.** A robot having a camera mounted at a distal end portion of a robot arm, comprising:

means for displaying an image captured by the camera on a display device;
means for allowing a first manual operation to specify an arbitrary point on an object in a first image captured by the camera at a first position and displayed on the display device;
means for obtaining first position information of the specified point in the first image;
means for determining a first direction/amount of motion based on the first position information;
means for moving the distal end portion of the robot arm with the camera to a second position according to the determined first direction/amount of the first motion;
means for allowing a second manual operation to specify the same point on the object as specified by the first manual operation, in a second image captured by the camera at the second position and displayed on the display device;
means for obtaining second position information of the specified point in the second image;
means for determining a second direction/amount of motion based on the first position information and the second position information; and
means for moving the distal end portion of the robot arm with the camera to a third position according to the determined second direction/amount of motion.

**3.** A robot having a camera mounted at a distal end portion of a robot arm, comprising:

means for displaying an image captured by the camera on a display device;
means for allowing a first manual operation to specify an arbitrary point on an object in a first image captured by the camera at a first position and displayed on the display device;
means for obtaining first position information of the specified point in the first image;
means for determining a first direction of motion based on the first position information;
means for moving the distal end portion of the robot arm with the camera to a second position according to the determined first direction of motion and a preset amount of motion;
means for allowing a second manual operation to specify the same point on the object as specified by the first manual operation, in a second image captured by the camera at the second position and displayed on the display device;
means for obtaining second position information of the specified point on the object in the second image;
means for determining a second direction/amount of motion based on the first position information and the second position information; and
means for moving the distal end portion of the robot arm with the camera to a third position according to the determined second direction/amount of motion.

4. A robot having a camera mounted at a distal end portion of a robot arm, comprising:

means for displaying an image captured by the camera on a display device;
means for allowing a first manual operation to specify an arbitrary point on an object in a first image captured by the camera at a first position and displayed on the display device;
means for obtaining first position information of the specified point in the first image;
means for moving the distal end portion of the robot arm with the camera to a second position according to a preset first direction/amount of motion;
means for allowing a second manual operation to specify the same point on the object as specified by the first manual operation, in a second image captured by the camera at the second position and displayed on the display device;
means for obtaining second position information of the specified point on the object in the second image;
means for determining a second direction/amount of motion based on the first position information and the second position information; and
means for moving the distal end portion of the robot arm with the camera to a third position according to the determined second direction/amount of motion.

5. A robot having a camera mounted on a distal end portion of a robot arm, comprising:

means for detecting an object in a first image captured by the camera at a first position;
means for obtaining first position information of the detected object in the first image;
means for determining a first direction/amount of motion of the camera based on the first position information;
means for moving the distal end portion of the robot arm with the camera to a second position according to the determined first direction/amount of motion;
means for detecting the same object as the detected object, in a second image captured by the camera at the second position;
means for obtaining second position information of the detected object in the second image;
means for determining a second direction/amount of motion based on the first position information and the second position information; and
means for moving the distal end portion of the robot arm with the camera to a third position based on the determined second direction/amount of motion.

6. A robot having a camera mounted at a distal end portion of a robot arm, comprising:

means for detecting an object in a first image captured by the camera at a first position;
means for obtaining first position information of the detected object in the first image;
means for determining a first direction of motion based on the first position information;
means for moving the distal end portion of the robot arm with the camera to a second position according to the determined first direction of motion and a preset amount of motion;
means for detecting the same object as the detected object, in a second image captured by the camera at the second position;
means for obtaining second position information of the detected object in the second image;
means for determining a second direction/amount of motion based on the first position information and the second position information; and
means for moving the distal end portion of the robot arm with the camera to a third position according to the determined second direction/amount of motion.

7. A robot having a camera mounted at a distal end portion of a robot arm, comprising:

means for detecting an object in a first image captured by the camera at a first position;
means for obtaining first position information of the detected object in the first image;
means for moving the distal end portion of the robot arm with the camera to a second position according to a preset first direction/amount of motion;
means for detecting the same object as the detected object, in a second image captured by the camera at the second position;
means for obtaining second position information of the detected object in the second image;
means for determining a second direction/amount of motion based on the first position information and the second position information; and

means for moving the distal end portion of the robot arm with the camera to a third position according to the determined second direction/amount of motion.

8. A robot having a camera mounted at a distal end portion of a robot arm, comprising:

means for detecting an object in a first image captured by the camera at a first position;
means for obtaining first size information of the detected object in the first image;
means for determining a first amount of motion based on the first size information;
means for moving the distal end portion of the robot arm to a second position according to a preset direction of motion and the determined first amount of motion;
means for detecting the same object as the detected object, in a second image captured by the camera at the second position;
means for obtaining second size information and position information of the detected object in the second image;
means for determining a second direction/amount of motion based on the first size information, the second size information and the position information; and
means for moving the distal end portion of the robot arm with the camera to a third position according to the determined second direction/amount of motion.

9. A robot having a camera mounted at a distal end portion of a robot arm, comprising:

means for detecting an object in a first image captured by the camera at a first position;
means for obtaining first size information of the detected object in the first image;
means for moving the distal end portion of the robot arm with the camera to a second position according to a preset first direction/amount of motion;
means for detecting the same object as the detected object, in a second image captured by the camera at the second position;
means for obtaining second size information and position information of the detected object in the second image;
means for determining a second direction/amount of motion of the camera based on the first size information, the second size information and the position information; and
means for moving the distal end portion of the robot arm with the camera to a third position according to the determined second direction/amount of motion.

10. A robot having a camera mounted at a distal end portion of a robot arm, comprising:

means for displaying an image captured by the camera on a display device;
means for allowing a manual operation to specify an arbitrary point on an object in a first image captured by the camera at a first position and displayed on the display device;
means for obtaining first position information of the specified point in the first image;
means for creating an image model based on image information in the vicinity of the specified point in the first image;
means for determining a first direction/amount of motion based on the first position information;
means for moving the distal end portion of the robot arm with the camera to a second position according to the determined first direction/amount of motion;
means for detecting the same point as the specified point, in a second image captured by the camera at the second position using the image model;
means for obtaining second position information of the detected point in the second image;
means for determining a second direction/amount of motion based on the first position information and the second position information; and
means for moving the distal end portion of the robot arm with the camera to a third position according to the determined second direction/amount of motion.

11. A robot having a camera mounted at a distal end portion of a robot arm, comprising:

means for displaying an image captured by the camera on a display device;
means for allowing a manual operation to specify an arbitrary point on an object in a first image captured by the camera at a first position and displayed on the display device;

means for obtaining first position information of the specified point in the first image;

means for creating an image model based on image information in the vicinity of the specified point in the first image;

means for determining a first direction of motion based on the first position information;

means for moving the distal end portion of the robot arm with the camera to a second position according to the determined first direction of motion and a preset amount of motion;

means for detecting the same point as the specified point, in a second image captured by the camera at the second position using the image model;

means for obtaining second position information of the detected point in the second image;

means for determining a second direction/amount of motion based on the first position information and the second position information; and

means for moving the distal end portion of the robot arm with the camera to a third position according to the determined second direction/amount of motion.

12. A robot having a camera mounted at a distal end portion of a robot arm, comprising:

means for displaying an image captured by the camera on a display device;

means for allowing a manual operation to specify an arbitrary point on an object in a first image captured by the camera at a first position and displayed on the display device;

means for obtaining first position information of the specified point in the first image;

means for creating an image model based on image information in the vicinity of the specified point in the first image;

means for moving the distal end portion of the robot arm with the camera to a second position according to a preset first direction/amount of motion;

means for detecting the same point as the specified point, in a second image captured by the camera at the second position using the image model;

means for obtaining second position information of the detected point in the second image;

means for determining a second direction/amount of motion based on the first position information and the second position information; and

means for moving the distal end portion of the robot arm with the camera to a third position according to the determined second direction/amount of motion.

13. A robot according to any one of claims 2-12, wherein said means for determining the second direction/amount of motion determines the second direction/amount of motion for the third position where the specified point on the object is on an optical axis of the camera and spaced apart form the camera by a predetermined distance.

14. A robot according to any one of claims 2-12, wherein said means for determining the second direction/amount of motion determines the second direction/amount of motion such that an end of a tool attached to the distal end portion of the robot arm is positioned at the specified point on the object.

15. A method of operating a robot having a camera mounted at a distal end portion of a robot arm, comprising the steps of:

positioning the distal end portion of the robot arm with the camera at a first position on a plane spaced from an object by a predetermined first distance;

displaying an image captured by the camera at the first position on a display device;

allowing a manual operation to specify an arbitrary point on the object in the captured image displayed on the display device;

obtaining position information of the specified point in the captured image;

determining a direction/amount of motion of the camera to a second position where the camera confronts the specified point on the object with a predetermined second distance in between based on the obtained position information and the first predetermined distance; and

moving the distal end portion of the robot arm with the camera to the second position in accordance with the determined direction/amount of motion.

16. A method of operating a robot having a camera mounted at a distal end portion of a robot arm, comprising the steps of:

displaying a first image captured by the camera at a first position on a display device;
allowing a first manual operation to specify an arbitrary point on an object in the first image displayed on the display device;
obtaining first position information of the specified point in the first image;
determining a first direction/amount of motion based on the first position information;
moving the distal end portion of the robot arm with the camera to a second position according to the determined first direction/amount of the first motion;
displaying a second image captured by the camera at the second position on the display device;
allowing a second manual operation to specify the same point on the object as specified by the first manual operation, in the second image displayed on the display device;
obtaining second position -information of the specified point in the second image;
determining a second direction/amount of motion based on the first position information and the second position information; and
moving the distal end portion of the robot arm with the camera to a third position according to the determined second direction/amount of motion.

17. A method of operating a robot having a camera mounted at a distal end portion of a robot arm, comprising the steps of:

displaying a first image captured by the camera at a first position on a display device;
allowing a first manual operation to specify an arbitrary point on an object in the first image displayed on the display device;
obtaining first position information of the specified point in the first image;
determining a first direction of motion based on the first position information;
moving the distal end portion of the robot arm with the camera to a second position according to the determined first direction of motion and a preset amount of motion;
displaying a second image captured by the camera at the second position on the display device;
allowing a second manual operation to specify the same point on the object as specified by the first manual operation, in the second image displayed on the display device;
obtaining second position information of the specified point on the object in the second image;
determining a second direction/amount of motion based on the first position information and the second position information; and
moving the distal end portion of the robot arm with the camera to a third position according to the determined second direction/amount of motion.

18. A method of operating a robot having a camera mounted at a distal end portion of a robot arm, comprising the steps of:

displaying a first image captured by the camera at a first position on a display device;
allowing a first manual operation to specify an arbitrary point on an object in the first image displayed on the display device;
obtaining first position information of the specified point in the first image;
moving the distal end portion of the robot arm with the camera to a second position according to a preset first direction/amount of motion;
displaying a second image captured by the camera at the second position on the display device;
allowing a second manual operation to specify the same point on the object as specified by the first manual operation, in the second image displayed on the display device;
obtaining second position information of the specified point on the object in the second image;
determining a second direction/amount of motion based on the first position information and the second position information; and
means for moving the distal end portion of the robot arm with the camera to a third position according to the determined second direction/amount of motion.

19. A method of operating a robot having a camera mounted on a distal end portion of a robot arm, comprising the steps of:

detecting an object in a first image captured by the camera at a first position;
obtaining first position information of the detected object in the first image;

determining a first direction/amount of motion of the camera based on the first position information;

moving the distal end portion of the robot arm with the camera to a second position according to the determined first direction/amount of motion;

detecting the same object as the detected object, in a second image captured by the camera at the second position;

obtaining second position information of the detected object in the second image;

determining a second direction/amount of motion based on the first position information and the second position information; and

moving the distal end portion of the robot arm with the camera to a third position based on the determined second direction/amount of motion.

20. A method of operating a robot having a camera mounted at a distal end portion of a robot arm, comprising the steps of:

detecting an object in a first image captured by the camera at a first position;

obtaining first position information of the detected object in the first image;

determining a first direction of motion based on the first position information;

moving the distal end portion of the robot arm with the camera to a second position according to the determined first direction of motion and a preset amount of motion;

detecting the same object as the detected object, in a second image captured by the camera at the second position;

obtaining second position information of the detected object in the second image;

determining a second direction/amount of motion based on the first position information and the second position information; and

moving the distal end portion of the robot arm with the camera to a third position according to the determined second direction/amount of motion.

21. A method of operating a robot having a camera mounted at a distal end portion of a robot arm, comprising the steps of:

detecting an object in a first image captured by the camera at a first position;

obtaining first position information of the detected object in the first image;

moving the distal end portion of the robot arm with the camera to a second position according to a preset first direction/amount of motion;

detecting the same object as the detected object, in a second image captured by the camera at the second position;

obtaining second position information of the detected object in the second image;

determining a second direction/amount of motion based on the first position information and the second position information; and

moving the distal end portion of the robot arm with the camera to a third position according to the determined second direction/amount of motion.

22. A method of operating a robot having a camera mounted at a distal end portion of a robot arm, comprising the steps of:

detecting an object in a first image captured by the camera at a first position;

obtaining first size information of the detected object in the first image;

determining a first amount of motion based on the first size information;

moving the distal end portion of the robot arm to a second position according to a preset direction of motion and the determined first amount of motion;

detecting the same object as the detected object, in a second image captured by the camera at the second position;

obtaining second size information and position information of the detected object in the second image;

determining a second direction/amount of motion based on the first size information, the second size information and the position information; and moving the distal end portion of the robot arm with the camera to a third position according to the determined second direction/amount of motion.

23. A method of operating a robot having a camera mounted at a distal end portion of a robot arm, comprising the steps of:

detecting an object in a first image captured by the camera at a first position;

obtaining first size information of the detected object in the first image;

moving the distal end portion of the robot arm with the camera to a second position according to a preset first direction/amount of motion;

detecting the same object as the detected object, in a second image captured by the camera at the second position;

obtaining second size information and position information of the detected object in the second image;

determining a second direction/amount of motion of the camera based on the first size information, the second size information and the position information; and

moving the distal end portion of the robot arm with the camera to a third position according to the determined second direction/amount of motion.

24. A method of operating a robot having a camera mounted at a distal end portion of a robot arm, comprising the steps of:

displaying a first image captured by the camera at a first position on a display device;

allowing a manual operation to specify an arbitrary point on an object in the first image displayed on the display device;

obtaining first position information of the specified point in the first image;

creating an image model based on image information in the vicinity of the specified point in the first image;

determining a first direction/amount of motion based on the first position information;

moving the distal end portion of the robot arm with the camera to a second position according to the determined first direction/amount of motion;

detecting the same point as the specified point, in a second image captured by the camera at the second position using the image model;

obtaining second position information of the detected point in the second image;

determining a second direction/amount of motion based on the first position information and the second position information; and

moving the distal end portion of the robot arm with the camera to a third position according to the determined second direction/amount of motion.

25. A method of operating a robot having a camera mounted at a distal end portion of a robot arm, comprising the steps of:

displaying a first image captured by the camera at a first position on a display device;

allowing a manual operation to specify an arbitrary point on an object in the first image displayed on the display device;

obtaining first position information of the specified point in the first image;

creating an image model based on image information in the vicinity of the specified point in the first image;

determining a first direction of motion based on the first position information;

moving the distal end portion of the robot arm with the camera to a second position according to the determined first direction of motion and a preset amount of motion;

detecting the same point as the specified point, in a second image captured by the camera at the second position using the image model;

obtaining second position information of the detected point in the second image;

determining a second direction/amount of motion based on the first position information and the second position information; and

moving the distal end portion of the robot arm with the camera to a third position according to the determined second direction/amount of motion.

26. A method of operating a robot having a camera mounted at a distal end portion of a robot arm, comprising the steps of:

displaying a first image captured by the camera at a first position on a display device;

allowing a manual operation to specify an arbitrary point on an object in the first image displayed on the display device;

obtaining first position information of the specified point in the first image;

creating an image model based on image information in the vicinity of the specified point in the first image;

moving the distal end portion of the robot arm with the camera to a second position according to a preset first direction/amount of motion;

detecting the same point as the specified point, in a second image captured by the camera at the second position using the image model;

obtaining second position information of the detected point in the second image;

determining a second direction/amount of motion based on the first position information and the second position information; and

moving the distal end portion of the robot arm with the camera to a third position according to the determined second direction/amount of motion.

**27.** A method of operating a robot according to any one of claims 16-26, wherein said means for determining the second direction/amount of motion determines the second direction/amount of motion for the third position where the specified point on the object is on an optical axis of the camera and spaced apart form the camera by a predetermined distance.

**28.** A method of operating a robot according to any one of claims 16-26, wherein said means for determining the second direction/amount of motion determines the second direction/amount of motion such that an end of a tool attached to the distal end portion of the robot arm is positioned at the specified point on the object.

# FIG. 1

# FIG. 3

EP 1 512 499 A2

# FIG. 2

MAIN UPU  (11)

MEMORY  (12)

TEACHING OPERATION PANEL I/F  (13)

COMMUNICATION I/F  (14)

TO IMAGE PROCESSING UNIT

(18)

(17)

SERVO CONTROLLER #1  — A1

SERVO CONTROLLER #2  — A2

SERVO CONTROLLER #n  — An

EXTERNAL DEVICE I/F  (16)

(15)

M1    M2    Mn

# FIG. 4

# FIG. 5

## FIG.6a

## FIG.6b

FIG.7a

THE NUMBER OF PIXELS: N1

FIG.7b

THE NUMBER OF PIXELS: N2

FIG.8a

THE NUMBER OF PIXELS: N1

FIG.8b

THE NUMBER OF PIXELS: N2

$(W_1 + W_2) - L_2$

FIG.9a

THE NUMBER
OF PIXELS: N1

2a

4

R1

3

$L_1$

$L_0$

$W_1$

Q

5

x

z ⊗ $\Sigma_c$

FIG.9b

$L_2$

$L_1 - L_2$

$L_0$

2a

THE NUMBER
OF PIXELS: N2

4

R2

3

p

q

Q

5

FIG.10a

THE NUMBER
OF PIXELS: N1

SIZE OF
IMAGE: S1

2a

4

R1

3

$L_1$

$L_0$

Q

5

x

z ⊗ $\Sigma_c$

FIG.10b

$L_2$

$L_1 - L_2$

$L_0$

2a

THE NUMBER
OF PIXELS: N2

SIZE OF
IMAGE: S2

3

4

R2

p

q

Q

5

FIG.11a

FIG.11b

# FIG.12

```
        ┌─────────────┐
        │    START    │
        └─────────────┘
               │
   ┌───────────────────────────┐
100│   POSITION CAMERA TO BE    │
   │ SPACED FROM OBJECT BY L1   │
   └───────────────────────────┘
               │
   ┌───────────────────────────┐
101│   CAPTURE IMAGE OF OBJECT   │
   └───────────────────────────┘
               │
   ┌───────────────────────────┐
102│    DISPLAY CAPTURED IMAGE   │
   └───────────────────────────┘
               │
               ▼
103  ◇ TARGET SELECTED? ◇───── No
               │
              Yes
               │
   ┌───────────────────────────┐
104│  DETERMINE THE NUMBER N1   │
   │     OF PIXELS OF TARGET    │
   └───────────────────────────┘
               │
   ┌───────────────────────────┐
105│      W1 = C0·N1            │
   └───────────────────────────┘
               │
   ┌───────────────────────────────────────┐
106│  DETERMINE AND OUTPUT MOTION VECTOR q  │
   │   q = [W1·L1∕L0, 0, L0−L1]T            │
   └───────────────────────────────────────┘
               │
   ┌───────────────────────────┐
107│   OPERATE ROBOT TO MOVE    │
   │ CAMERA TO BE POSITIONED AT U│
   │ ACCORDING TO MOTION VECTOR q│
   └───────────────────────────┘
               │
   ┌───────────────────────────┐
108│      OPERATE ROBOT         │
   │     ACCORDING TO U'        │
   │   U' = U·Tc⁻¹·Tf·Tt        │
   └───────────────────────────┘
               │
        ┌─────────────┐
        │     END     │
        └─────────────┘
```

Block 105: $W_1 = C_0 \cdot N_1$

Block 106: DETERMINE AND OUTPUT MOTION VECTOR $q$
$$q = [W_1 \cdot L_1 / L_0,\ 0,\ L_0 - L_1]^T$$

Block 108: OPERATE ROBOT ACCORDING TO $U'$
$$U' = U \cdot T_c^{-1} \cdot T_f \cdot T_t$$

## FIG.13

START

200 CAPTURE IMAGE OF OBJECT

201 DISPLAY CAPTURED IMAGE

202 TARGET SELECTED? — No

Yes

203 DETERMINE THE NUMBER $N_1$ OF PIXELS OF TARGET

204 $W_1 = C_0 \cdot N_1$

205 MOVE CAMERA IN X–AXIS DIRECTION BY $W_1$

206 CAPTURE IMAGE OF OBJECT

207 DISPLAY CAPTURED IMAGE

208 TARGET SELECTED? — No

Yes

209 DETERMINE THE NUMBER $N_2$ OF PIXELS OF TARGET

210 DETERMINE AND OUTPUT MOTION VECTOR q
$$q = [C_0 \cdot N_1 \cdot N_2 / (N_1 - N_2),\ 0,\ -N_2 \cdot L_0 / (N_1 - N_2)]^T$$

211 MOVE CAMERA TO POSITION U ACCORDING TO MOTION VECTOR q

212 OPERATE ROBOT ACCORDING TO U'
$$U' = U \cdot T_c^{-1} \cdot T_f \cdot T_t$$

END

## FIG.14

START

300    CAPTURE IMAGE OF OBJECT

301    DISPLAY CAPTURED IMAGE

302    TARGET SELECTED? — No

Yes

303    DETERMINE THE NUMBER $N_1$ OF PIXELS OF TARGET

304    MOVE CAMERAI N X-AXIS DIRECTION BY $L_2$

305    CAPTURE IMAGE OF OBJECT

306    DISPLAY CAPTURED IMAGE

307    TARGET SELECTED? — No

Yes

308    DETERMINE THE NUMBER $N_2$ OF PIXELS OF TARGET

309    DETERMINE AND OUTPUT MOTION VECTOR $q$
$$q = [N_2 \cdot L_2 / (N_1 - N_2),\ 0,\ (C_0 \cdot (N_1 - N_2) \cdot L_0 - L_0 \cdot L_2) / C_0 \cdot (N_1 - N_2)]^T$$

310    MOVE CAMERA TO POSITION U ACCORDING TO MOTION VECTOR $q$

311    OPERATE ROBOT ACCORDING TO U'
$$U' = U \cdot T_c^{-1} \cdot T_f \cdot T_t$$

END

EP 1 512 499 A2

## FIG.15

START

400 CAPTURE IMAGE OF OBJECT

401 DISPLAY CAPTURED IMAGE

402 TARGET SELECTED? — No

Yes

403 DETERMINE THE NUMBER $N_1$ OF PIXELS OF TARGET

404 MOVE CAMERAIN Z-AXIS DIRECTION BY $L_2$

405 CAPTURE IMAGE OF OBJECT

406 DISPLAY CAPTURED IMAGE

407 TARGET SELECTED? — No

Yes

408 DETERMINE THE NUMBER $N_2$ OF PIXELS OF TARGET

409 DETERMINE AND OUTPUT MOTION VECTOR $q$
$$q = [C_0 \cdot N_1 \cdot N_2 \cdot L_2 / (N_2 - N_1) \cdot L_0, \ 0, \ \{(N_2 - N_1) \cdot L_0 - N_1 \cdot L_2\} / (N_2 - N_1)]^T$$

410 MOVE CAMERA TO POSITION U ACCORDING TO MOTION VECTOR $q$

411 OPERATE ROBOT ACCORDING TO U'
$$U' = U \cdot T_c^{-1} \cdot T_f \cdot T_t$$

END

31

## FIG.16

START

500 | CAPTURE IMAGE OF OBJECT

501 | DISPLAY CAPTURED IMAGE

502 | DETECT IMAGE MODEL OF TARGET

503 | DETERMINE SIZE $S_1$ OF TARGET

504 | MOVE CAMERA BY $L_2$ IN X-DIRECTION

505 | CAPTURE IMAGE OF OBJECT

506 | DISPLAY CAPTURED IMAGE

507 | DETECT MODEL IMAGE OF TARGET

508 | DETERMINE SISE $S_2$ AND THE NUMBER $N_2$ OF PIXELS OF TARGET

509 | DETERMINE AND OUTPUT MOTION VECTOR q
$q = [C_0 \cdot N_2 \cdot S_1 \cdot L_2 / (S_2 - S_1) \cdot L_0,\ 0,\ \{(S_2 - S_1) \cdot L_0 - S_1 \cdot L_2\} / (S_2 - S_1)]^T$

510 | MOVE CAMERA TO POSITION U ACCORDING TO MOTION VECTOR q

511 | OPERATE ROBOT ACCORDING TO U'
$U' = U \cdot T_c \cdot T_f \cdot T_t$

END